# EUROPEAN PATENT APPLICATION

(11) **EP 4 660 107 A1**
(43) Date of publication of application: **10.12.2025**
(21) Application number: 24792588.6
(22) Date of filing: 11.04.2024
(51) Int. Cl.: B65G 47/14

(54) **ORIENTING AND SINGULATING FEEDER**

(30) Priority: 18.04.2023 JP 2023067796
(71) Applicant: Qualicaps Co., Ltd., Nara 639-1032 (JP)
(72) Inventor: MATSUYAMA Tomokazu, Yamatokoriyama-shi, Nara 639-1032 (JP); KASAI Kenichi, Yamatokoriyama-shi, Nara 639-1032 (JP)
(74) Representative: Isarpatent
(86) International application number: PCT/JP2024/014623
(87) International publication number: WO 2024/219313

(57) **Abstract**

A first transfer part 10 having a disk-shaped rotary disk 11 and a second transfer part 20 having an annular rotary ring 21 surrounding the first transfer part 10 are included; an annular holding part 24, for holding a solid dosage form P supplied from the first transfer part 10, is provided in an upper portion of the rotary ring 21; a guide part 40, supported above the holding part 24 between a first delivery position P1 and a second delivery position P2 and extending in an arc shape in a circumferential direction of the rotary ring 21, is further included; and a posture regulating surface 42, for correcting, in the holding part 24, a posture of the solid dosage form P held in an improper posture by the holding part 24 when the solid dosage form P slides, is provided in a lower portion of the guide part 40.

## Description

### Technical Field

The present invention relates to an alignment transfer device, and more particularly to an alignment transfer device that transfers solid dosage forms, such as tablets or capsules, in an aligned state.

### Background Art

As a conventional alignment transfer device, the configuration disclosed in Patent Literature 1 is known. As illustrated in FIG. 12, an alignment transfer device 100 includes a rotary disk 101, a first ring 102, and a second ring 103, and when each of them is individually rotationally driven in the arrow direction, a solid dosage form P supplied onto the rotary disk 101 receives a centrifugal force and moves to a transfer part in the upper portion of the peripheral wall of the second ring 103 via the upper portion of the peripheral wall of the first ring 102. The solid dosage form P to be transferred by the second ring 103 is adsorbed onto the outer peripheral surface of a suction roller 104 and transferred upward.

### Citation List

### Patent Literature

Patent Literature 1: JP 6503525 B2

### Summary of Invention

### Technical Problem

The conventional alignment transfer device 100 described above can align the solid dosage forms P during transfer in the transfer part of the second ring 103, but there is a risk that some of the solid dosage forms P may be transferred to the suction roller 104 in an improper posture. Therefore, the alignment transfer device 100 includes a cover (not illustrated) above the transfer part of the second ring 103, and is configured to be able to transfer only the solid dosage forms P in a proper posture to the suction roller 104 by returning the solid dosage forms P transferred in an improper posture to the upper surface of the rotary disk 101 by contact with the cover.

However, there has been a risk that when all of the solid dosage forms P in an improper posture are returned from the second ring 103 to the rotary disk 101, the ratio of the gaps between the solid dosage forms P in the transfer part of the second ring 103 increases, and thus the transfer amount of the solid dosage forms P per unit time may decrease.

Therefore, an object of the present invention is to provide an alignment transfer device capable of efficiently aligning and transferring solid dosage forms.

### Solution to Problem

The object of the present invention is achieved by an alignment transfer device including: a first transfer part that has a disk-shaped rotary disk and transfers a solid dosage form supplied to an upper surface of the rotary disk radially outward by rotation of the rotary disk; and a second transfer part that has an annular rotary ring surrounding the first transfer part and transfers the solid dosage form supplied from the first transfer part at a first delivery position to a second delivery position in a circumferential direction by rotation of the rotary ring, the solid dosage form being able to be taken out in an aligned state at the second delivery position, in which: an annular holding part, which is formed in a notch shape whose inner peripheral side and upper side are opened and holds the solid dosage form supplied from the first transfer part, is provided in an upper portion of the rotary ring; a guide part, supported in an upper portion of the holding part between the first delivery position and the second delivery position and extending in an arc shape in the circumferential direction of the rotary ring, is further included; and a posture regulating surface, for correcting, in the holding part, a posture of the solid dosage form held in an improper posture by the holding part when the solid dosage form slides, is provided in a lower portion of the guide part.

In the alignment transfer device, it is preferable that the posture regulating surface be formed to be inclined with respect to the axis of the rotary ring so as to face radially inward along the rotary ring. It is more preferable that the inclination angle of the posture regulating surface with respect to the axis in the radial cross section of the rotary ring be 20 to 50 degrees.

It is preferable that the posture regulating surface be formed such that a contact portion with the solid dosage form in an improper posture is located further radially inward along the rotary ring as the contact portion moves downstream in the transfer direction.

An airflow injection part to be provided between the guide part and the second delivery position may be further included, the airflow injection part being capable of injecting an airflow from above to a portion, protruding radially inward from the holding part, of the solid dosage form.

The first transfer part may further include an annular intermediate ring rotatably provided between the rotary disk and the rotary ring, so that the solid dosage form can be supplied from the rotary disk to the rotary ring via the intermediate ring.

### Advantageous Effects of Invention

According to the alignment transfer device of the present invention, solid dosage forms can be efficiently aligned and transferred.

### Brief Description of Drawings

FIG. 1 is a cross-sectional view of an alignment transfer device according to one embodiment of the present invention.
FIG. 2 is a perspective view of the alignment transfer device illustrated in FIG. 1.
FIG. 3 is a perspective view of a main part of the alignment transfer device illustrated in FIG. 2.
FIG. 4 is cross-sectional views of a main part of the alignment transfer device illustrated in FIG. 3.
FIG. 5 is front views illustrating examples of a solid dosage form to be transferred by the alignment transfer device illustrated in FIG. 1.
FIG. 6 is cross-sectional views of a main part illustrating an operation step of the alignment transfer device illustrated in FIG. 1.
FIG. 7 is cross-sectional views of a main part illustrating another operation step of the alignment transfer device illustrated in FIG. 1.
FIG. 8 is cross-sectional views of a main part for explaining the movement of the alignment transfer device illustrated in FIG. 1.
FIG. 9 is a perspective view of a main part of an alignment transfer device according to another embodiment of the present invention.
FIG. 10 is cross-sectional views of a main part illustrating an operation step of the alignment transfer device illustrated in FIG. 9.
FIG. 11 is a cross-sectional view of an alignment transfer device according to still another embodiment of the present invention.
FIG. 12 is a schematic configuration view of a conventional alignment transfer device.

### Description of Embodiments

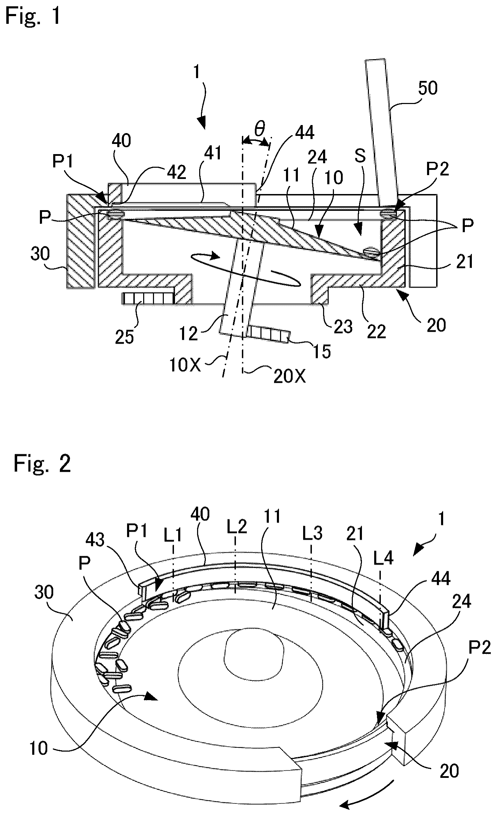

Hereinafter, embodiments of the present invention will be described with reference to the accompanying drawings. FIG. 1 is a cross-sectional view of an alignment transfer device according to one embodiment of the present invention. FIG. 2 is a perspective view of the alignment transfer device illustrated in FIG. 1 as viewed obliquely from above. An alignment transfer device 1 illustrated in FIGS. 1 and 2 is a device that aligns and transfers a solid dosage form P such as a tablet or a capsule, and includes a first transfer part 10, a second transfer part 20 arranged to surround the first transfer part 10, a support part 30 arranged to surround the second transfer part 20, and a guide part 40 supported by the support part 30. In a case where the solid dosage form P to be transferred is a tablet, the shape thereof is not particularly limited, and a flat tablet, an R-shaped tablet, a round tablet, an irregular-shaped tablet, or the like can be exemplified.

The first transfer part 10 has: a disk-shaped rotary disk 11 rotatably supported around a rotation axis 10X; and a shaft portion 12 extending downward along the rotation axis 10X from the lower center of the rotary disk 11. The rotary disk 11 is formed in a cap-like shape such that the upper surface is inclined downward toward the radial outside. The shaft portion 12 is connected to a drive source (not illustrated), such as a motor, via a speed reducer 15, and is rotationally driven in the direction indicated by the arrow.

The second transfer part 20 includes: an annular rotary ring 21 arranged to surround the rotary disk 11 and rotatably supported around a rotation axis 20X; a lower lid 22 covering the lower portion of the rotary ring 21; and a shaft portion 23 extending downward along the rotation axis 20X from the center of the lower lid 22. The shaft portion 23 is a hollow shaft, is connected to a drive source (not illustrated), such as a motor, via a speed reducer 25, and is rotationally driven in the same direction as the shaft portion 12 of the first transfer part 10 inserted therein. The rotational speed of the rotary ring 21 is set to be higher than the rotational speed of the rotary disk 11. Preferably, the rotational speed of the rotary ring 21 is set to be higher than the rotational speed of the rotary disk 11 and lower than 1.5 times the rotational speed of the rotary disk 11.

A holding part 24, for holding the solid dosage form P in an aligned state in the circumferential direction, is provided in the upper portion of the rotary ring 21. The holding part 24 is formed in a notch shape such that the inner peripheral side and upper side of the rotary ring 21 are opened, and formed such that the lower surface thereof lies along a plane orthogonal to the rotation axis 20X. The lower surface of the holding part 24 may be formed to be inclined downward toward the radial outside. The radial width of the holding part 24 is set in accordance with the size of the solid dosage form P such that the solid dosage forms P are aligned and arranged in a line along the circumferential direction.

The rotary disk 11 is located below the holding part 24 so as to form a retention space S, where the solid dosage forms P supplied from the outside to the upper surface can be retained, inside the rotary ring 21, and the respective rotation axes 10X, 20X are relatively inclined such that, at a first delivery position P1, the upper surface of the rotary disk 11 lies at substantially the same height as the lower surface of the holding part 24, whereby the solid dosage forms P can be delivered.

In the present embodiment, the rotation axis 20X of the second transfer part 20 extends in the vertical direction, whereas the rotation axis 10X of the first transfer part 10 is inclined by an angle θ with respect to the rotation axis 20X. It is preferable that the angle θ be, for example, 1 to 20°. The rotation axis 20X is not necessarily arranged in the vertical direction, and may be inclined with respect to the vertical direction. In a case where the rotation axis 20X is inclined with respect to the vertical direction, the rotation axis 10X may be arranged in the vertical direction, or may be arranged to be inclined in the same or opposite direction as or to the inclination direction of the rotation axis 20X with respect to the vertical direction.

The solid dosage form P, held by the holding part 24 and transferred by the rotation of the rotary ring 21, is vacuum-adsorbed to a suction roller 50, having an adsorbing portion on the outer peripheral surface, at a second delivery position P2, and is transferred toward an external transfer destination. Note that in FIG. 2, the suction roller 50 is not illustrated. The first delivery position P1 and the second delivery position P2 of the present embodiment have a point-symmetrical relationship across the rotation axis 20X in plan view, in which the second delivery position P2 is provided at a position rotated by 180° around the rotation axis 20X from the first delivery position P1.

The support part 30 is formed of an annular member arranged concentrically with the rotary ring 21 with a slight gap provided from the outer peripheral surface of the rotary ring 21, and as illustrated in FIG. 2, a portion corresponding to the second delivery position P2 is cut off, and the suction roller 50 illustrated in FIG. 1 is arranged at the cut-off portion.

The guide part 40 is fixed to the inner periphery of the support part 30 so as to extend in an arc shape in the circumferential direction of the rotary ring 21, and is supported in the upper portion of the holding part 24 between the first delivery position P1 and the second delivery position P2 along the transfer direction. In the present embodiment, a proximal end 43 of the guide part 40 is located slightly upstream, in the transfer direction, from the first delivery position P1, while a distal end 44 of the guide part 40 is located at an area near the middle, along the transfer direction, between the first delivery position P1 and the second delivery position P2.

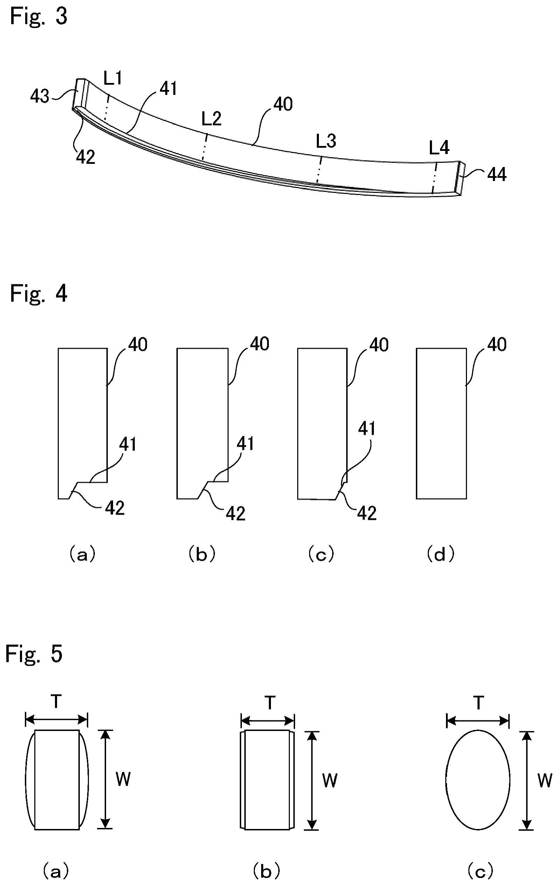

FIG. 3 is a perspective view of the guide part 40 as viewed obliquely from below. As illustrated in FIG. 3, the guide part 40 has a shape obtained by curving a strip plate into an arc shape, and a notch 41, having a shape in which the notch is cut out from the inner peripheral side and extends in the circumferential direction, is formed in the lower portion of the guide part 40. On the wall surface, on the outer peripheral side, of the notch 41, a posture regulating surface 42, for correcting the posture of the solid dosage form P held by the holding part 24 in an improper posture when the solid dosage form P slides, is provided.

FIG. 4 is cross-sectional views along the radial direction of the arc-shaped guide part 40 illustrated in FIG. 3, and FIGS. 4(a) to (d) illustrate cross sections including virtual lines L1 to L4 on the inner peripheral surface of the guide part 40 illustrated in FIG. 3, respectively. In the vicinity of the proximal end 43 of the guide part 40 illustrated in FIG. 3, the notch 41 is largely notched in the radial direction (thickness direction) as illustrated in FIG. 4(a). Meanwhile, the notch 41 gradually becomes smaller from the proximal end 43 toward the distal end 44 as illustrated in FIGS. 4(b) and (c), and the posture regulating surface 42 gradually moves from the outer peripheral side to the inner peripheral side of the guide part 40. As illustrated in FIG. 4(d), there is no notch 41 in the vicinity of the distal end 44 of the guide part 40 illustrated in FIG. 3.

In the alignment transfer device 1 having the above configuration, the solid dosage form P charged into the retention space S formed by the rotary disk 11 and the rotary ring 21 moves radially outward by receiving the centrifugal force due to the rotation of the rotary disk 11, and moves from the first delivery position P1 to the holding part 24 of the rotary ring 21. The solid dosage form P having moved to the holding part 24 is transferred to the second delivery position P2 while being aligned by the rotation of the rotary ring 21; adsorbed by the suction roller 50 at the second delivery position P2 to be taken out in an aligned state; and transferred toward an external transfer destination (e.g., a printing apparatus or an inspection apparatus).

The postures of the solid dosage forms P having moved from the rotary disk 11 to the holding part 24 at the first delivery position P1 are usually in a proper posture in which the thickness direction is the up-down direction, but there is a risk that some of the solid dosage forms P may move to the holding part 24 in an improper posture in which the width direction is the up-down direction. In such a case, in the alignment transfer device 1 of the present embodiment, when the solid dosage form P held by the holding part 24 in an improper posture slides along the posture regulating surface 42 of the guide part 40 as the rotary ring 21 rotates, the posture of the solid dosage form P can be corrected in the holding part 24. Although the shape of the solid dosage form P is not necessarily limited, it is possible to preferably exemplify a shape in which the solid dosage form P having a width W larger than a thickness T, like a round tablet illustrated in FIG. 5(a), a flat tablet illustrated in FIG. 5(b), or a lens-type tablet illustrated in FIG. 5(c), is stable in a proper posture in which the thickness direction is the up-down direction, rather than an improper posture in which the width direction is the up-down direction.

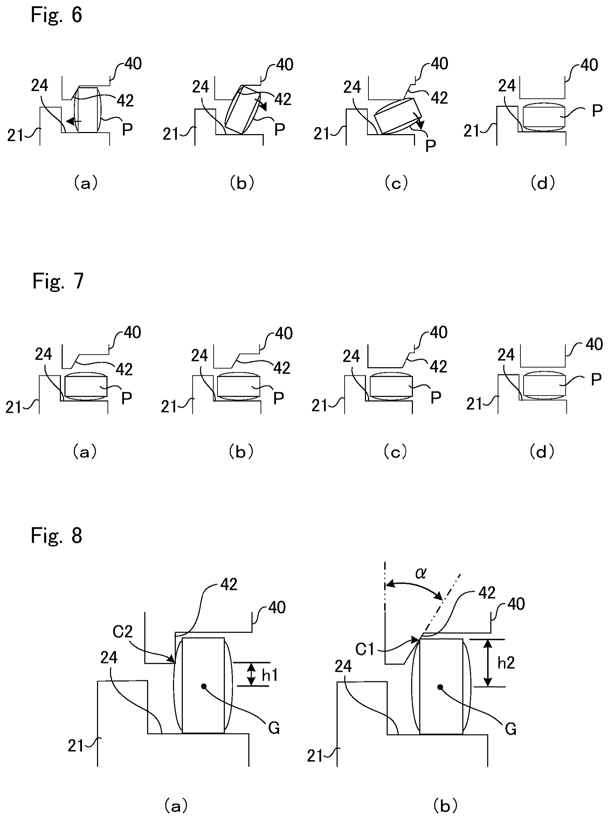

FIG. 6 and FIG. 7 are cross-sectional views of a main part illustrating an example of an operation step of the alignment transfer device 1. FIG. 6 illustrates a case where the posture of the solid dosage form P held by the holding part 24 is improper, while FIG. 7 illustrates a case where the posture of the solid dosage form P held by the holding part 24 is proper. The solid dosage form P in an improper posture, as illustrated in FIG. 6(a), is gradually tilted in the arrow direction in FIGS. 6(b) and (c) by application of a centrifugal force in the arrow direction oriented radially outward to the lower portion in a state where the upper portion is in contact with the posture regulating surface 42, and is eventually transferred in a proper posture in the holding part 24 as illustrated in FIG. 6(d). On the other hand, the solid dosage form P in a proper posture, as illustrated in FIG. 7(a), does not come into contact with the posture regulating surface 42, so that the solid dosage form P is transferred while the proper posture is being maintained, as illustrated in FIGS. 7(b) to (d).

As described above, the solid dosage form P having moved to the holding part 24 at the first delivery position P1 passes through the guide part 40, so that the solid dosage form P reliably takes a proper posture and is transferred to the second delivery position P2 without falling from the holding part 24. Therefore, it is possible to efficiently align and transfer the solid dosage form P by suppressing the occurrence of a gap between the solid dosage forms P held by the holding part 24.

The circumferential length of the guide part 40 is not necessarily limited, but in the present embodiment, the length is set such that the central angle of the arc-shaped guide part 40 is about 90 degrees (i.e., about 1/4 of the circumferential length of the holding part 24). As the circumferential length of the guide part 40 is made larger, the sliding distance between the solid dosage form P and the posture regulating surface 42 can be more secured and the posture change of the solid dosage form P during transfer be performed more gently, whereby the load acting on the solid dosage form P can be reduced. The central angle of the arc-shaped guide part 40 can also be set to, for example, about 270 degrees by increasing the distance from the first delivery position P1 to the second delivery position P2.

The posture regulating surface 42 provided on the guide part 40 illustrated in FIG. 1 may be parallel to the axis 20X of the rotary ring 21, but it is preferable that the posture regulating surface 42 be formed to be inclined with respect to the axis 20X of the rotary ring 21 so as to face radially inward along the rotary ring 21. In a case where the posture regulating surface 42 is parallel to the axis 20X of the rotary ring 21, the height from the center of gravity G of the solid dosage form P to a contact position C1 with the posture regulating surface 42 is h1, as illustrated in FIG. 8(a). On the other hand, in a case where the posture regulating surface 42 is inclined with respect to the axis 20X of the rotary ring 21, the height from the center of gravity G to a contact position C2 with the posture regulating surface 42 is h2 that is larger than h1, as illustrated in FIG. 8(b), and even after the solid dosage form P starts to fall, the state in which the height h2 is larger can be maintained. Therefore, in the latter case, the posture of the solid dosage form P can be more easily and reliably corrected on the holding part 24. It is preferable from the above viewpoint that the inclination angle (angle α in FIG. 8(b)) of the posture regulating surface 42 with respect to the axis 20X in the radial cross section of the rotary ring 21 be set to be in the range of 20 to 50 degrees. The height from the lower surface of the holding part 24 to the posture regulating surface 42 can be appropriately adjusted according to the shape or size of the solid dosage form P by changing the attachment height of the guide part 40 to the support part 30 or configuring the guide part 40 to be replaceable.

As illustrated in FIGS. 6(a) to (c), the posture regulating surface 42 of the present embodiment is formed such that a contact portion with the solid dosage form P in an improper posture is located further radially inward along the rotary ring 21 as the contact portion moves downstream in the transfer direction. Therefore, the sliding state between the solid dosage form P and the posture regulating surface 42 can be reliably maintained until the solid dosage form P falls down, and this also makes it possible to reliably change the posture of the solid dosage form P on the holding part 24.

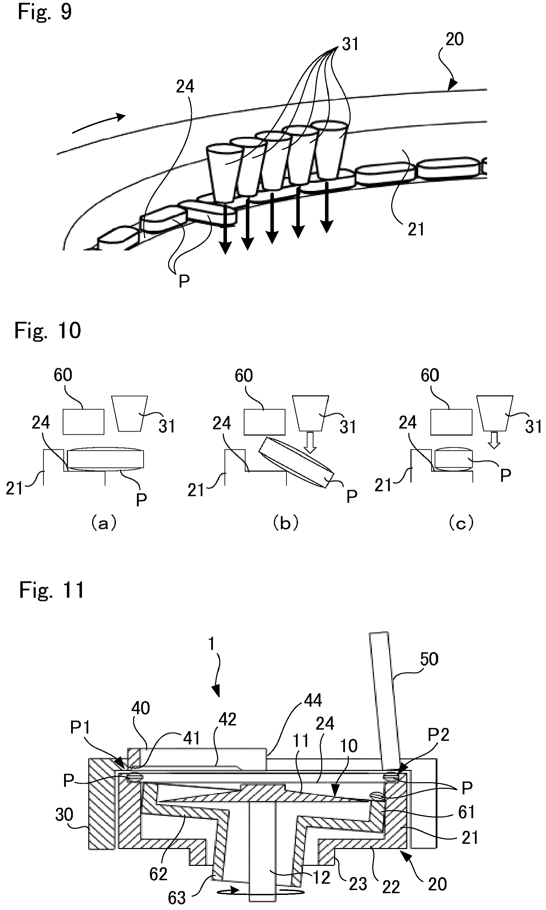

FIG. 9 is a perspective view of a main part of an alignment transfer device according to another embodiment of the present invention. The alignment transfer device illustrated in FIG. 9 has an airflow injection part 31 arranged between the distal end 44 of the guide part 40 and the second delivery position P2 in the alignment transfer device 1 illustrated in FIGS. 1 and 2, and other configurations are similar to those of the alignment transfer device 1 illustrated in FIGS. 1 and 2. The airflow injection part 31 is supported by, for example, the support part 30 illustrated in FIGS. 1 and 2 via a non-illustrated bracket.

As illustrated in FIG. 9, the airflow injection part 31 is arranged to inject an airflow, such as an air current, from above to the inside of the holding part 24. The solid dosage forms P held by the holding part 24 pass through the guide part 40 in a proper posture and are normally aligned such that the longitudinal directions orient along the transfer direction by a centrifugal force, but there is a risk that a small part of the solid dosage forms P may protrude radially inward from the holding part 24. In this case, the airflow injection part 31 injects an airflow vertically downward toward the portion, protruding radially inward from the holding part 24, of the solid dosage form P as illustrated in FIGS. 10(a) and (b), whereby the solid dosage form P can be dropped from the holding part 24 onto the rotary disk 11. On the other hand, when there is no portion, protruding radially inward from the holding part 24, of the solid dosage form P as illustrated in FIG. 10(c), the solid dosage form P passes through as it is without being affected by the airflow injected from the airflow injection part 31. In this way, the solid dosage form P can be more reliably aligned in the holding part 24.

Although a plurality of the airflow injection parts 31 of the present embodiment are provided along the circumferential direction of the holding part 24, the airflow injection part 31 may be single. The injection of an airflow by the airflow injection part 31 may be performed constantly, or may be performed intermittently by detecting the portion, protruding radially inward from the holding part 24, of the solid dosage form P with a sensor or the like.

As illustrated in FIG. 10, a height regulating guide 60 may be provided immediately above the holding part 24 on the radially outer side of the airflow injection part 31 illustrated in FIG. 9. It is preferable that the height of the height regulating guide 60 be set not to interfere with the solid dosage form P when the solid dosage form P is dropped as illustrated in FIG. 10(b).

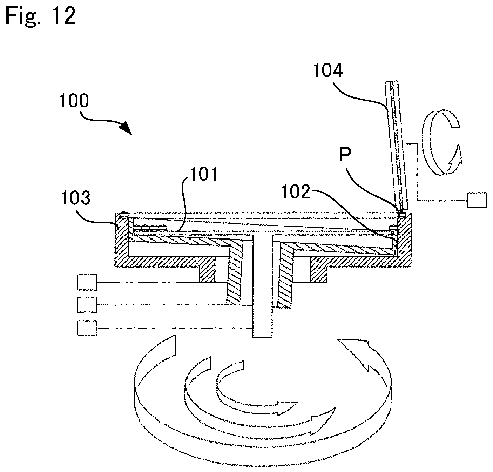

The first transfer part 10 of the present embodiment is configured to supply the solid dosage form P from the rotary disk 11 to the second transfer part 20. However, as illustrated in FIG. 11, the first transfer part 10 may be configured to include an intermediate ring 61 in addition to the rotary disk 11 so that the solid dosage form P is supplied from the intermediate ring 61 to the second transfer part 20 at the first delivery position P1. The intermediate ring 61 is an annular member rotatably provided between the rotary disk 11 and the rotary ring 21, and a shaft portion 63 extends downward from the center of a lower lid 62 covering the lower portion, whereby the intermediate ring 61 is rotatably supported. The configuration of the alignment transfer device 1 illustrated in FIG. 11 is similar to the configuration of the conventional alignment transfer device 100 illustrated in FIG. 12, in which the solid dosage form P can be supplied from the rotary disk 11 to the rotary ring 21 via the intermediate ring 61. The intermediate ring 61 is not limited to a single ring, and a plurality of intermediate rings may be provided.

### Reference Signs List

- 1: alignment transfer device
- 10: first transfer part
- 11: rotary disk
- 20: second transfer part
- 21: rotary ring
- 24: holding part
- 30: support member
- 31: airflow injection part
- 40: guide part
- 42: posture regulating surface
- 61: intermediate ring
- P: solid dosage form
- P1: first delivery position
- P2: second delivery position

## Claims

1. An alignment transfer device comprising:
a first transfer part that has a disk-shaped rotary disk and transfers a solid dosage form supplied to an upper surface of the rotary disk radially outward by rotation of the rotary disk; and
a second transfer part that has an annular rotary ring surrounding the first transfer part and transfers the solid dosage form supplied from the first transfer part at a first delivery position to a second delivery position in a circumferential direction by rotation of the rotary ring, the solid dosage form being able to be taken out in an aligned state at the second delivery position, wherein
an annular holding part, which is formed in a notch shape whose inner peripheral side and upper side are opened and holds the solid dosage form supplied from the first transfer part, is provided in an upper portion of the rotary ring,
a guide part, supported in an upper portion of the holding part between the first delivery position and the second delivery position and extending in an arc shape in the circumferential direction of the rotary ring, is further included, and
a posture regulating surface, for correcting, in the holding part, a posture of the solid dosage form held in an improper posture by the holding part when the solid dosage form slides, is provided in a lower portion of the guide part.

2. The alignment transfer device according to claim 1, wherein the posture regulating surface is formed to be inclined with respect to an axis of the rotary ring so as to face radially inward along the rotary ring.

3. The alignment transfer device according to claim 2, wherein an inclination angle of the posture regulating surface with respect to the axis in a radial cross section of the rotary ring is 20 to 50 degrees.

4. The alignment transfer device according to claim 1, wherein the posture regulating surface is formed such that a contact portion with the solid dosage form in an improper posture is located further radially inward along the rotary ring as the contact portion moves downstream in a transfer direction.

5. The alignment transfer device according to claim 1, further comprising an airflow injection part provided between the guide part and the second delivery position,
the airflow injection part injecting an airflow from above to a portion, protruding radially inward from the holding part, of the solid dosage form.

6. The alignment transfer device according to claim 1, wherein the first transfer part further includes an annular intermediate ring rotatably provided between the rotary disk and the rotary ring, so that the solid dosage form is supplied from the rotary disk to the rotary ring via the intermediate ring.
